# EUROPEAN PATENT SPECIFICATION

(11) **EP 1 041 695 B1**
(45) Date of publication and mention of the grant of the patent: **31.08.2005**
(21) Application number: 99126136.3
(22) Date of filing: 29.12.1999
(51) Int. Cl.: B60R 16/02, H04B 10/213, H02J 13/00

(54) **Vehicular network system and modification method therefor**
Kraftfahrzeugnetz und dazugehöriges Veränderungsverfahren
Réseau de véhicule et méthode de modification

(30) Priority: 02.04.1999 JP 9687699
(43) Date of publication of application: 04.10.2000
(73) Proprietor: YAZAKI CORPORATION, Tokyo 108 (JP)
(72) Inventor: Yamaguchi, Toru, Susono-shi, Shizuoka-ken (JP); Oshima, Tsuyoshi, Susono-shi, Shizuoka-ken (JP)
(74) Representative: HOFFMANN EITLE

(56) References cited:
- DE-A- 4 228 733
- US-A- 5 274 570
- "T-CONNECTOR FOR TOKEN-RING" IBM TECHNICAL DISCLOSURE BULLETIN, IBM CORP. NEW YORK, US, vol. 37, no. 4A, 1 April 1994 (1994-04-01), pages 485-486, XP000446747 ISSN: 0018-8689

## Description

### BACKGROUND OF THE INVENTION

### 1. Field of the Invention

The present invention relates to a vehicular network system for a vehicle such as an automobile having one or more existing installed units connected, e.g. in a loop, by a number of fiber-cabled or wired communication lines, and to a modification method therefor.

More specifically, the invention relates to a vehicular network system and a modification method therefor which, when it is desired to modify the network system, can accommodate such network system modification with simple and easy unit installation or removal at a low cost, while maintaining the configuration or topology of a communication line associated with existing units, as much as possible.

### 2. Description of the Related Art

DE A1 42 28 733 discloses a vehicular network system according to the preamble of claim 1 or 2.

In the past, there has been a network system for use in a vehicle, whereby a plurality of existing units installed in various locations in the vehicle are connected together via communication lines.

In such a vehicular network system, it often occurs that there is a desire to expand the system by adding, to the existing system configuration, such units as a mobile telephone or a CD changer.

To accommodate such needs in the past, a wiring harness assembly (hereinafter sometimes simply called "harness") which has an existing system configuration for making interconnections in a vehicle was once entirely removed from the vehicle, and an expansion unit was added to the removed harness, thereby constituting a modified harness with a modified system configuration. The modified harness was installed anew in the vehicle to make mutual connections between an increased number of units including the added expansion unit.

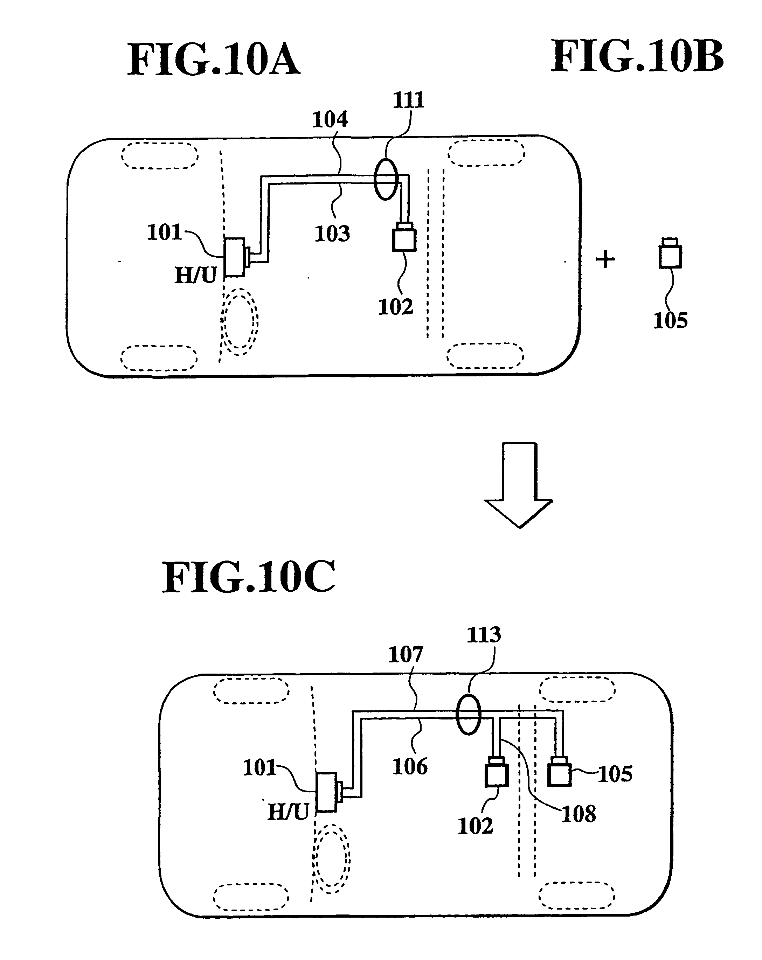

Figs. 10A to 10C illustrate a typical example, in which a vehicle has as existing units therein a head unit (H/U) 101 located near a dashboard of the vehicle, and a sub-unit 102 located in a trunk thereof. A harness 111, which includes optical communication lines 103 and 104, makes mutual connections between the units 101 and 102, thereby serving as a vehicular network system. To expand this network system to a system shown in Fig. 10C by adding an expansion unit 105 shown in Fig. 10B, the following procedure is performed.

First, the harness 111, which makes inter-unit connections between the head-unit 101 and the sub-unit 102 in the network system shown in Fig. 10A, is removed from the vehicle.

After removing the harness 111, the new expansion unit 105 shown in Fig. 10B is installed in a location such as the trunk of the vehicle, after which a new harness 113, which includes optical communication lines 106, 107, and 108 of a type different from the previous optical communication lines, is used to make connections between the units 101 and 102 and the newly installed expansion unit 105. This harness is wired so as to form an expanded vehicular network system.

Thus, when attempting to accommodate the need to expand a network system using the approach of the past, instead of re-using the original wiring in the network system, the harness was replaced with a new harness. This made it necessary not only to remove the existing harness from the vehicle, but also to make interconnections between the increased number of units using a newly fabricated harness. The result was a considerable complication of the work of expanding the network system, leading to the need to reduce the work steps involved in this procedure.

Additionally, because the entire harness was replaced with a new one, rather than re-using the existing harness, the approach taken in the past was not only wasteful from the standpoint of effective use of resources, but also presented the problem of an increase in the cost involved in expanding the network system.

### SUMMARY OF THE INVENTION

From the foregoing it will be understood that there has been a long-standing need for a new low-cost technique that would be able to accommodate the desire to modify a vehicular network system, making use of the existing wiring as much as possible, and using simple and uncomplicated steps.

Accordingly, it is an object of the present invention to provide a vehicular network system and a modification method therefor, which are each capable of accommodating a desire for modification, making maximum use of the existing wiring arrangement, while providing a simple, economical procedure.

An aspect of the present invention which achieves the above object is a vehicular network system according to claim 1 or 2. Preferred embodiments of the invention according to claim 1 or 2 are indicated in dependent claims 3 to 6.

According to this aspect of the present invention, by breaking a communication line midway to allow insertion of one or more new expansion units, it is possible to make maximum use of the existing wiring harness when there is a need to expand the vehicular network system, this expansion being implemented by simple steps and with a low cost.

Preferably, the communication lines connecting the one or more existing units comprise a pair of optical communication lines each respectively dedicated for one of reception and transmission and provided with a connector joint.

Preferably, by allowing individual dedicated transmitting and receiving communication lines to be broken to allow insertion of one or more new expansion units, it is possible to make maximum use of the existing wiring harness when there is a need to expand the vehicular network system, this expansion being implemented by simple steps and with a low cost.

Preferably, each of the one or more expansion units has a combination of communication line and connector configured to be handled as a standardized option for inter-unit connection.

Accordingly, by standardizing the expansion units to enable interconnection therebetween by a communication line with a connector, it is possible to provide quicker response to a desire of a user for network system expansion.

Preferably, a ring network system for vehicular optical communication consists of a set of mutually connectable and disconnectable modules interconnected by connectors meeting a common specification for connection.

Preferably, the modules each comprise an opto-electrical transducer, an electro-optical transducer, a processor connected between the opto-electrical transducer and the electro-optical transducer, and a casing for enclosing the opto-electrical transducer, the electro-optical transducer, and the processor.

According to another aspect of the present invention, a modification method for modifying a vehicular network system has the features which are indicated in independent claim 7.

According to any of these three aspects of the invention also, there can be achieved like effects.

### BRIEF DESCRIPTION OF THE ACCOMPANYING DRAWINGS

The above and further objects and novel features of the present invention will more fully appear from the following detailed description when the same is read in conjunction with the accompanying drawings, in which:
Figs. 1A, 1B and 1C are schematic diagrams showing the configuration of a vehicular network system according to an embodiment of the present invention;
Figs. 2A and 2B are schematic diagrams showing the configuration of a vehicular network system according to another embodiment of the present invention;
Figs. 3A and 3B are schematic diagrams showing the configuration of a vehicular network system according to another embodiment of the present invention;
Figs. 4A, 4B and 4C are detailed perspective views cooperatively illustrating an expansion procedure for an optical connection joint of an optical communication line, as a modification method according to an embodiment of the present invention;
Fig. 5 is a block diagram of a ring network for vehicular optical communication used as a vehicular network system according to another embodiment of the present invention;
Fig. 6 is a block diagram of a large-scale module in the ring network of Fig. 5;
Fig. 7 is a cross-sectional view of a basic module in the large-scale module of Fig. 6;
Fig. 8 is an exploded perspective view of the basic module of Fig. 7;
Figs. 9A to 9F are block diagrams of diverse line assemblies prefabricated for inter-module connections in the ring network of Fig. 5; and
Figs. 10A, 10B and 10C are schematic diagrams illustrating an example of a vehicular network system of the past.

### DETAILED DESCRIPTION OF THE PREFERRED EMBODIMENTS

There will be detailed below the preferred embodiments of the present invention with reference to relevant accompanying drawings.

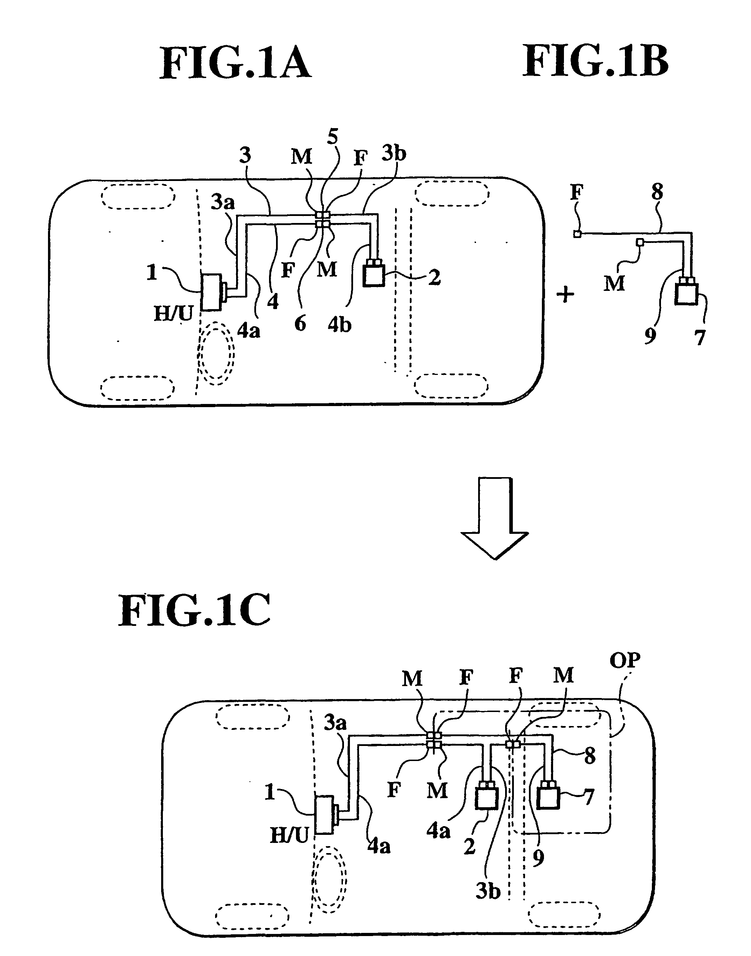

In the first embodiment of the present invention, as shown in Fig. 1A, the existing units are a head unit (H/U) 1 located near the dashboard of the vehicle, and an equipment unit 2 located in the trunk of the vehicle. Optical communication lines 3 and 4 make interconnections between the existing units 1 and 2. Connector joints 5 and 6 are provided at appropriately selected locations along the lengths of cables of the lines 3 and 4, thereby separating the communication lines 3 and 4 into communication lines 3a and 4a on the head unit 1 side and communication lines 3b and 4b on the equipment unit 2 side.

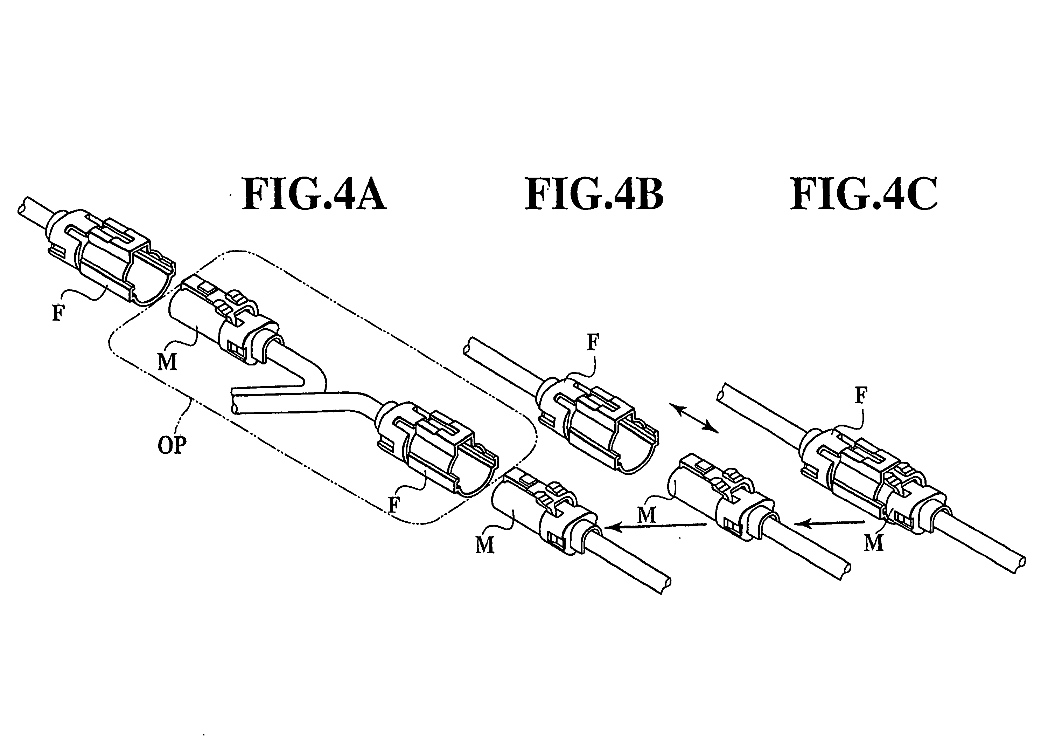

The connector joints 5 and 6, which are located in the communication lines 3 and 4 midway between the existing units 1 and 2, maintain their joined condition by the mating of a male connector M and a female connector F, as shown in Fig. 4A, and are separated by breaking the mated condition between the male connector M and the female connector F, as shown in Fig. 4B.

That is, in this embodiment, for the optical communication lines 3a and 4a on the head unit 1 side, the cable of line 3a has a male connector M and the cable of line 4a has a female connector F, and for the optical communication lines 3b and 4b, a cable of the line 3b has a female connector F and a cable of the line 4b has a male connector M. With this arrangement, the communication lines 3 and 4 enable joining and separation between the connector joints 5 and 6.

In a vehicular network system in which these existing units 1 and 2 are mutually connected via the optical communication lines 3 and 4, it is extremely easy to expand the vehicular network system by adding a new expansion unit 7, such as shown in Fig. 1B, thereby resulting in the vehicular network system shown in Fig. 1C.

More specifically, when adding one or more expansion units 7 to the existing units 1 and 2 in this embodiment, first the connector joint 5 provided in the optical communication line 3 is broken, such as illustrated in Fig. 4B, and the male connector M of the optical communication line 3a is joined, as illustrated in Fig. 4A, to a female connector F of an optical communication line 8 extending from the new expansion unit 7, thereby connecting the optical communication line 3a with the optical communication line 8. In the same manner, the female connector F of the optical communication line 3b is joined to a male connector M of another optical communication line 9 extending from the new expansion unit 7, thereby connecting the optical communication line 3b with the optical communication line 9.

The optical communication line 4 between the existing units 1 and 2 remains connected via the connector joint 6 provided therein. Thus, the female connector F of the optical communication line 4a remains mating with the male connector M of the optical communication line 4b, thereby maintaining the connected condition between the optical communication lines 4a and 4b.

Thus, in the embodiment, when adding one or more expansion units (collectively represented by the expansion unit 7) to the existing units 1 and 2, the optical communication line 3 is separated at the connector joint 5, and the connectors M and F rendered free by this action at the connector joint 5 are joined to free connectors F and M on the expansion unit side, respectively, thereby adding the one or more expansion units to the existing units 1 and 2. This arrangement enables low-cost accommodation of the need to expand the vehicular network system, using simple steps and maintaining the existing configuration of wiring to the existing units as much as possible.

Further, the communication lines that connect one or more existing units (collectively represented by the units 1 and 2) comprise a pair of optical communication lines 3 and 4 dedicated either for transmission and the other for reception, and the optical communication lines 3 and 4 have their connector joints 5 and 6, and therefore even in application to a vehicular network system configured for the existing units 1 and 2 to be interconnected via the pair of optical communication lines 3 and 4 dedicated for transmission and reception, respectively, and even for a desire to expand the vehicular network system, the desire can be accommodated in an inexpensive manner in regard of the cost as well, while maintaining the existing wiring configuration as much as possible.

If the expansion unit 7 to be added for system expansion is prepared, together with the communication lines 8 and 9, in an adapted configuration to be treated as a standardized option OP suitable for connection between the existing communication lines 8 and 9, which include connectors, it is possible to achieve a vehicular network system capable of quick accommodation of a user need to make a system expansion.

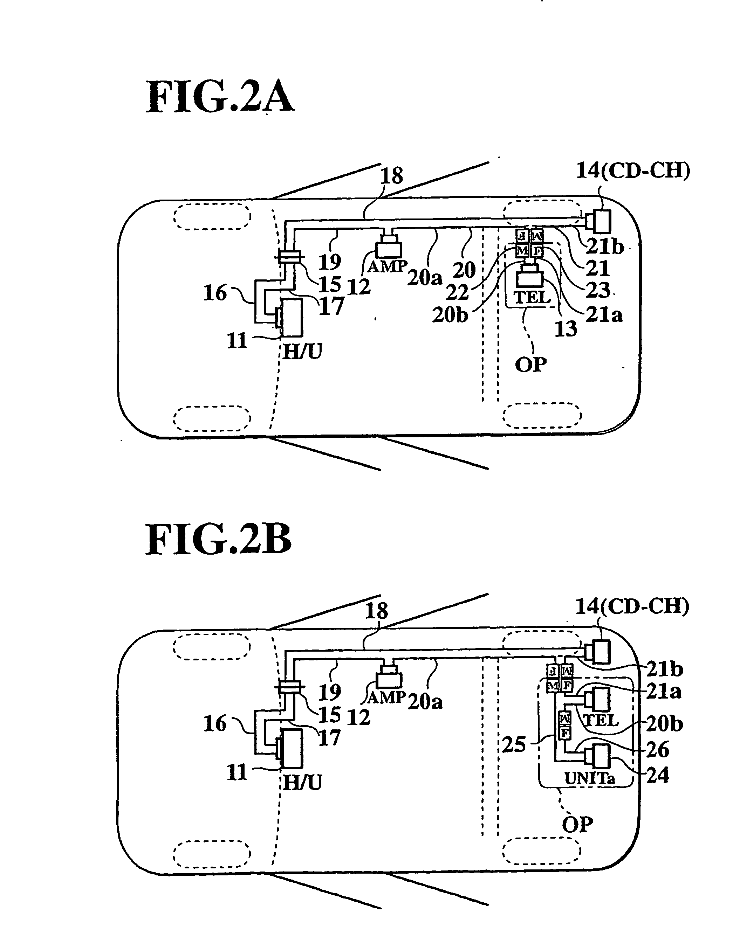

Figs. 2A and 2B illustrate a vehicular network system according to a second embodiment of the present invention. In this embodiment, as shown in Fig. 2A, the existing units are a head unit (H/U) 11 located near the dashboard of the vehicle, an equipment unit 12 such as an audio amplifier (AMP) located near the right central part of the vehicle along the driving direction thereof, an equipment unit 13 such as a mobile telephone (TEL) located in the vehicle trunk, and an equipment unit 14 such as a CD changer (CD-CH). In this embodiment, the plurality of units 11, 12, 13, and 14 are mutually interconnected by optical communication lines 16, 17, 18, 19, 20, and 21, so as to achieve a system configuration in which the head unit (H/U) 11 is connected to the other units 12 to 14. The communication line 20 making mutual connection between the equipment unit (AMP) 12 and the equipment unit (TEL) 13 is provided, at an appropriately selected location along the length thereof, with a connector joint 22 that enables the communication line 20 to be separated into a communication line 20a on the equipment unit (AMP) 12 side and a communication line 20b on the equipment unit (TEL) 13 side. The communication line 21 making mutual connection between the equipment unit (TEL) 13 and the equipment unit (CD-CH) 14 is provided, at an appropriately selected location along the length thereof, with a connector joint 23 that enables the communication line 21 to be separated into a communication line 21a on the equipment unit (TEL) 13 side and a communication line 21b on the equipment unit (CD-CH) 14 side. It will be understood that, while in this embodiment the equipment unit (TEL) 13 is treated as an existing unit, it could alternately be treated as an optional unit OP. Thus, in the second embodiment, after the vehicular network system is configured with the addition of one expansion unit, it is possible to retrofit another expansion unit.

Even in the case in which existing units 11, 12, 13, and 14 are interconnected with each other to constitute a vehicular network system by using optical communication lines 16, 17, 18, 19, 20, and 21, it is extremely simple to expand the vehicular network system by adding a new expansion unit (UNITa) 24 in the described manner, for example as shown in Fig. 2 B.

In the above-noted system expansion example, the connector joint 22 provided in the optical communication line 20 between the equipment unit (AMP) 12 and the equipment unit (TEL) 13 is separated, and a female connector F of the resulting optical communication line 20a is joined with a male connector M of an optical communication line 25 extending from the new expansion unit (UNITa) 24, thereby achieving a connection between the optical communication line 20a and the optical communication line 25. A male connector M of the optical communication line 20b is joined with a female connector F of another optical communication line 26 extending from the new expansion unit (UNITa) 24, thereby connecting the optical communication line 20b with the optical communication line 26.

The optical communication line 21 between the equipment unit (TEL) 13 and the equipment unit (CD-CH) 14 remains connected via the connector joint 23. Thus, a female connector F of the optical communication line 21a remains joined to a male connector M of the optical communication line 21b, so that the connection between the optical communication line 21a and the optical communication line 21b is maintained.

According to the second embodiment, after the system undergoes a first expansion, even if a further expansion is needed, this can be accommodated with simple and easy installation at a low cost, while maintaining the configuration of wiring to existing units as much as possible, similarly to the case of the first embodiment.

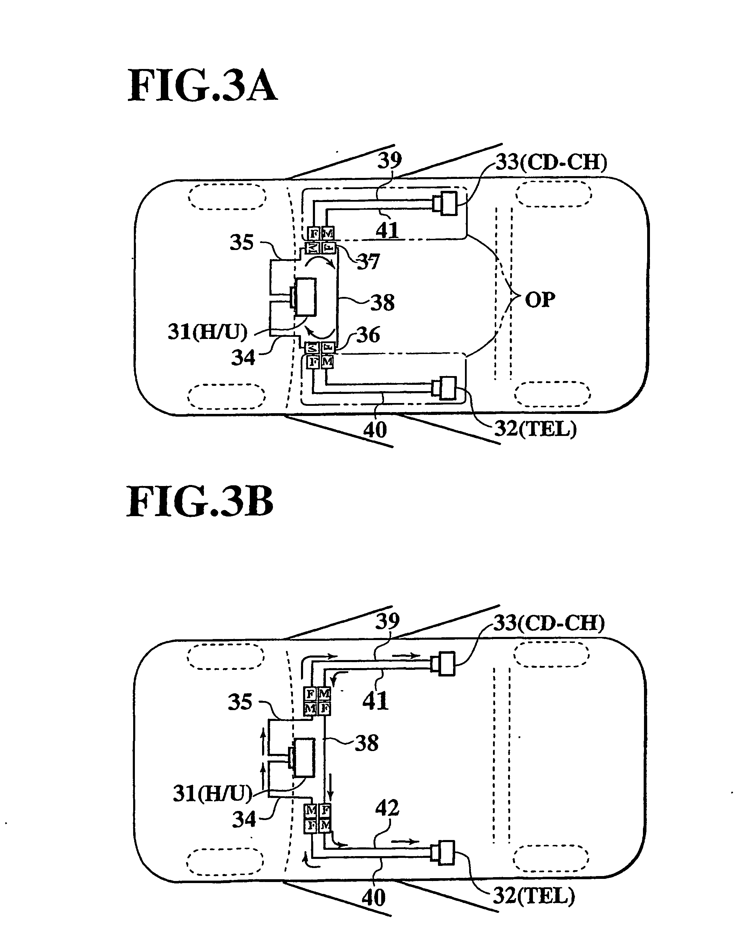

Figs. 3A and 3B illustrate a vehicular network system according to a third embodiment of the present invention. In this embodiment, the vehicular network system has such a configuration that the only existing unit is a head unit (H/U) 31 located near the vehicle dashboard. Optical communication lines 34 and 35 extending from the head unit (H/U) 31 are connected in a closed-loop configuration via a pair of connector joints 36 and 37 and an optical communication line 38. To this system configuration of this embodiment, an expansion unit (TEL) 32 is located near a left central part of the vehicle along a driving direction thereof, and an expansion unit (CD-CH) 33 is located near a right central part of the vehicle along the driving direction. This embodiment, therefore, illustrates the case in which the expansion unit (TEL) 32 and the expansion unit (CD-CH) 33 are installed as options, but not used in the vehicle.

If the vehicular network system is to be configured so as to include the expansion unit (TEL) 32 and the expansion unit (CD-CH) 33, a male connector M and a female connector F at the connector joint 36 provided between the optical communication line 34 and the optical communication line 38 are first separated, and a male connector M and a female connector F at the connector joint 37 provided between the optical communication line 35 and the optical communication line 38 are likewise separated.

Next, to achieve a configuration shown in Fig. 3B, the male connector M of the optical communication line 35 is joined to a female connector F of an optical communication line 39 extending from the expansion unit (CD-CH) 33, so as to connect the optical communication line 35 to the optical communication line 39, and the male connector M of the optical communication line 34 is joined to a female connector F of an optical communication line 40 extending from the expansion unit (TEL) 32, so as to connect the optical communication line 34 to the optical communication line 40.

By joining the female connector F of the connector joint 37 of the optical communication line 38 with a male connector M of an optical communication line 41 extending from the expansion unit (CD-CH) 44, connection is made between the optical communication line 38 and the optical communication line 41, and by joining the female connector F of the connector joint 36 of the optical communication line 38 to a male connector M of an optical communication line 42 extending from the expansion unit (TEL) 32, connection is made between the optical communication line 38 and the optical communication line 42.

Thus, the third embodiment, similarly to the first and second embodiments, can accommodate a system expansion with simple and easy installation at a low cost, while maintaining the configuration of wiring to existing units as much as possible, even in a case in which a plurality of expansion units located at mutually different positions in the vehicle are to be added to the network system at the same time.

In other words, the first embodiment of the present invention accommodates the need to expand a vehicular network system with simple and easy installation at a low cost, while maintaining the configuration of wiring to existing units as much as possible, the second embodiment makes use of dedicated transmitting and receiving optical communication lines to make connection between existing units to achieve the same effect as the first embodiment, and the third embodiment provides a further advantage in that it enables quick accommodation of the need to expand the vehicular network system.

The foregoing descriptions of embodiments of the present invention focused on cases in which one or more units were added to a factory-installed network so as to achieve an expanded system.

The present invention, however, will be understood as being applicable also to any other stage in the temporal sense, including initial factory installation, post-installation retrofitting for a partial or full expansion, and even post-installation removal of units so as to achieve a scaling down of the system configuration. In consideration of this universal applicability, it is possible to characterize the present invention as a ring network system for vehicular optical communication, which consists of a set of mutually connectable and disconnectable modules having their connectors meeting a common specification for connection, allowing for voluntary module combination and system modification so that the target system topology is a closed-ring network with no branches at any inter-module connector.

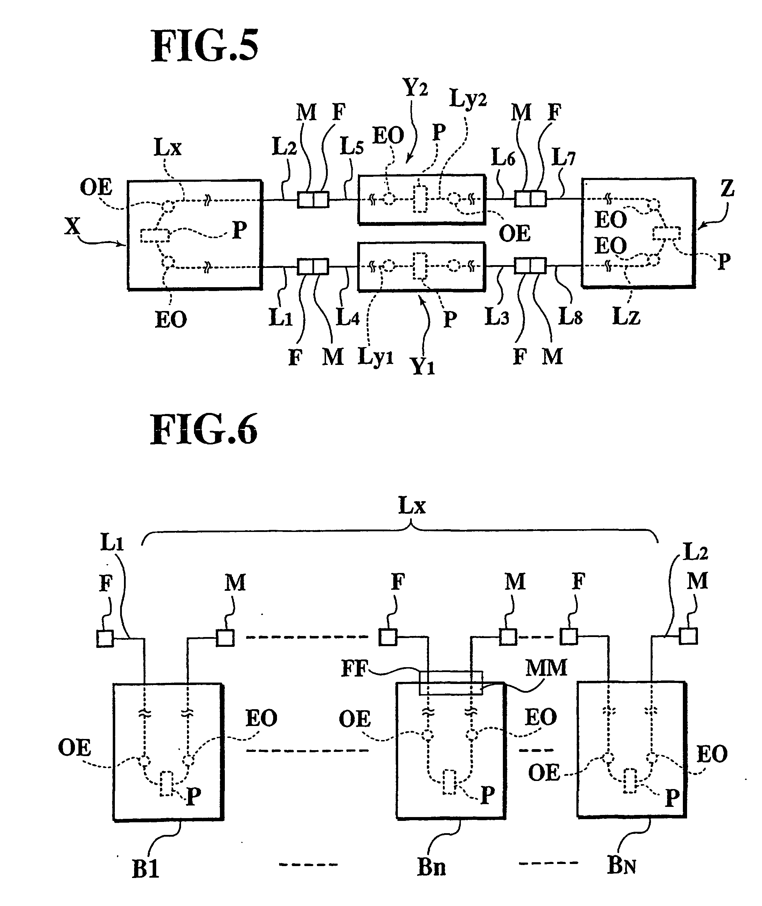

Fig. 5 shows a ring network for vehicular optical communication used as a network system according to a fifth embodiment of the present invention, taking into consideration the above-described view of the present invention.

This ring network is formed by a large-scale module X serving as a front network system disposed at the front of a vehicle, a small-scale module Y1 serving as a left-side network system disposed at the left side of the vehicle, another small-scale module Y2 serving as a right-side network system disposed at the right side of the vehicle, and a medium-scale module Z serving as a rear network system disposed at the rear part of the vehicle.

The respective modules X, Y1, Y2, and Z have their open-ended intra-module connection lines Lx, Ly1, Ly2, and Lz, formed by a single basic module (in terms of a combination of a pair of OE (opto-electrical) and EO (electro-optical) transducers and a microprocessor P connected therebetween), or two or more serially connected basic modules, and inter-module connection line segment pairs L1/L2, L3/L4, L5/L6, and L7/L8, which make connections between the intra-module connection lines of the modules X, Y1, Y2, and Z.

A single- or multi-poled female ferrule type connector (herein called "female connector") F is mounted to a free end of each of one-side line segments L1, L3, L5, and L7 of the inter-module connection line segment pairs L1/L2, L3/L4, L5/L6, and L7/L8, and another single- or multi-poled male ferrule type connector (herein called "male connector") M is mounted to a free end of each of the other-side line segments L2, L4, L6, and L8 of those line segment pairs. Because all of the female and male connectors F and M satisfy common mating specifications with regard to optical signals, ferrule abutment, and housing mating, it so follows that any female connector F is matable with any male connector M, so long as their signal processing requirements match. For example, at any point in the process of manufacturing or assembly, by mutually connecting the connectors F and M of rear end line segments L3 and L6 of the left and right modules Y1 and Y2, and mutually connecting the connectors F and M of front end line segments L7 and L8 of the rear module Z, it is possible to achieve a separation between a network that covers the front and middle parts of the vehicle (formed by a closed loop of modules X, Y1, and Y2) and a network that covers the rear part of the vehicle (closed loop with module Z). It is further possible at any time to remake the original connections to restore the network to its original configuration, or to add an intervening module therebetween so as to achieve a further network expansion.

As a general rule, in this embodiment there is no inter-module line segment with three or more inter-module connection connectors (counting F and M connectors separately), and no form of serial connection of inter-module connection line segments that has five or more inter-module connectors. In the case in which a small-scale module such as module Y1 or module Y2 is composed of a single basic module, each inter-module connection line segment of the small-scale module is formed by a corresponding inter-module line segment of the basic module.

It should be noted that in the intra-module connection lines as well, between any pair of serially connected EO and OE transducers, there is only the minimum number of connectors (as a general rule, not exceeding seven if possible, or a total of nine, including a pre-installed connector pair for an open circuit configuration).

In the above, it should be kept in mind that there are cases in which overall system considerations will make it preferable to use more connectors that the general rule, even if this causes some loss of light transmission efficiency, resulting in more stringent system requirements with regard to optical signal recognition.

Fig. 6 illustrates the intra-module connection line Lx as part of an optical communication line extending through the large-scale module X of the ring network of Fig. 5.

This part of the communication line, as well as other parts thereof, consists of a sequence of a total of N basic modules Bi serially connected by their male and female inter-module connectors F and M, where N is a predetermined positive integer, and i is an arbitrary integer not exceeding N. Any basic module Bi is constituted with an OE transducer connected to the female inter-module connector F of the basic module Bi, an EO transducer connected to the male inter-module connector M of the basic module Bi, a microprocessor P directly or indirectly connected between the OE and EO transducers and interfaced with or incorporated in an equipment unit, and a resin-molded or molds-combined enclosure or casing Cs that defines an optically shielding outside of the basic module Bi and substantially totally encloses whole or some elements therein including the OE and EO transducers, with the microprocessor P inclusive or exclusive. Some basic modules, e.g. B1 and B_{N}, are yet hierarchized to be associated with other microprocessors in the manner described above.

Most basic modules have a typical configuration illustrated as a basic module Bn in Fig. 6, which comprises a prefabricated module body MB and a prefabricated line assembly LA attached thereto. The module body MB comprises a casing Cs, a dual-pole male connector MM installed in or integrally formed at a front side of the casing Cs, an OE transducer connected to one pole of the dual-pole connector MM, an EO transducer connected to the other pole of the dual-pole connector MM, and a microprocessor P connected between the OE and EO transducers. The line assembly LA comprises a dual-pole female connector FF mating with the dual-pole male connector MM in a pole-to-pole optically connecting manner, a single-pole female connector F provided at a free end of an inter-module line segment Ln1 extending from one pole of the dual-pole female connector FF that mates with the above-mentioned one pole of the dual-pole male-element connector MM, and a single-pole male connector M provided at a free end of an inter-module line segment Ln2 extending from the other pole of the dual-pole female-element connector FF that mates with the above-mentioned other pole of the dual-pole male connector MM. The inter-module line segments Ln1 and Ln2 are each respectively provided with a total of two connectors FF and F or M.

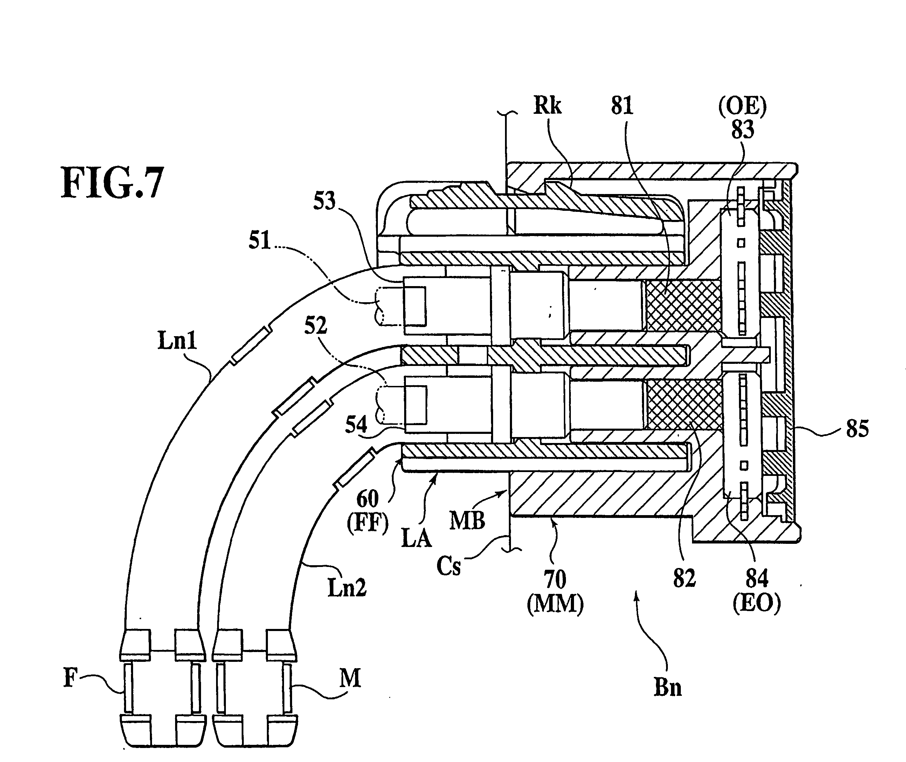

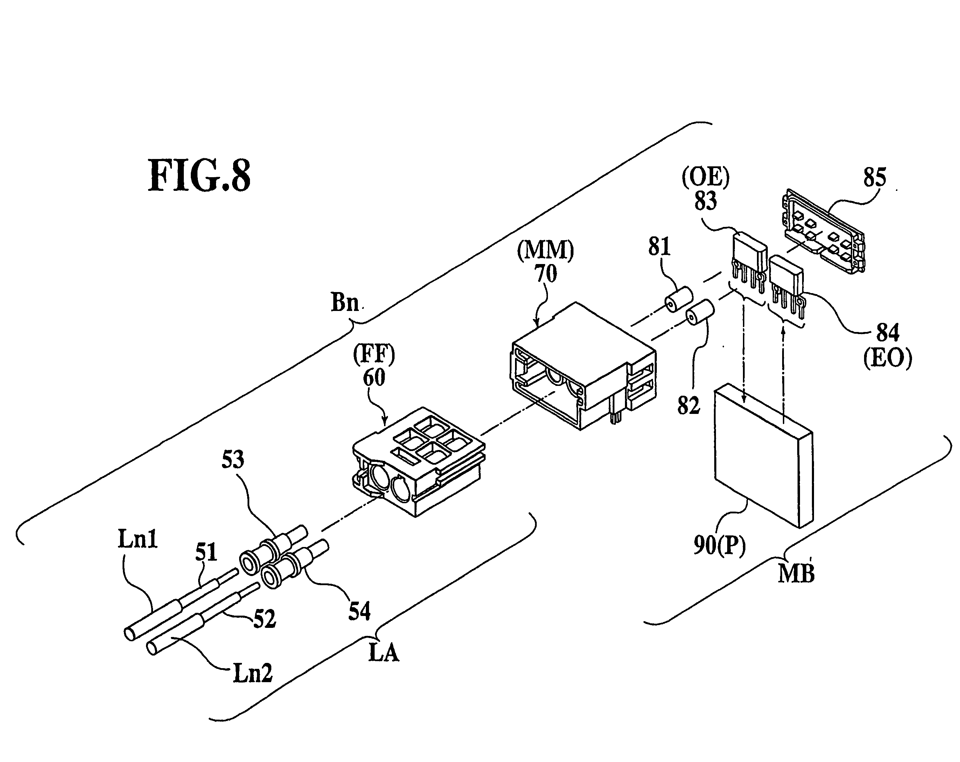

Fig. 7 shows a bottom view of a longitudinal cross section of the basic module Bn, and Fig. 8, an exploded perspective view thereof, omitting a processor enclosure.

In the line assembly LA, the inter-module line segments Ln1 and Ln2 have their optical fibers 51 and 52 fitted tight to be retained in ferules 53 and 54, respectively, which ferules 51 and 52 are fixed in parallel position in a resin-mold male-form connector housing 60 of the dual-pole female-element connector FF in a conformally locking manner. The female connector F provided at the free end the inter-module line segment Ln1 and the male connector M provided at the free end the inter-module line segment Ln2 comprise the female and male connectors F and M shown in Figs. 4A to 4C, and can conformally and optically mate with each other in a self-latching and manually unlatchable manner.

The male-form connector housing 60 of the female connector FF is manually removably fitted in position in a resin-mold female-form connector housing 70 of the dual-pole male-element connector MM, and manually unlatchably latched thereto by a locking mechanism Rk constituted with a latching projection formed on a flexible thumb piece at an OE side of the housing 60 of the connector FF and a locking projection formed in a corresponding side of the housing 70 of the connector MM, so that the optical fibers 51 and 52 in the line assembly LA are centered to be optically connected, via sleeves 81 and 82 fitted in the connector housing 70, to an OE conversion element 83 of the OE transducer and an EO conversion element 84 of the EO transducer, respectively. The OE and EO transducers are pin-connected to an input/output interface provided in a housing 90 of the microprocessor P, and are shielded from around the connector MM with a rid 85 fixed to a rear end of the connector housing 70.

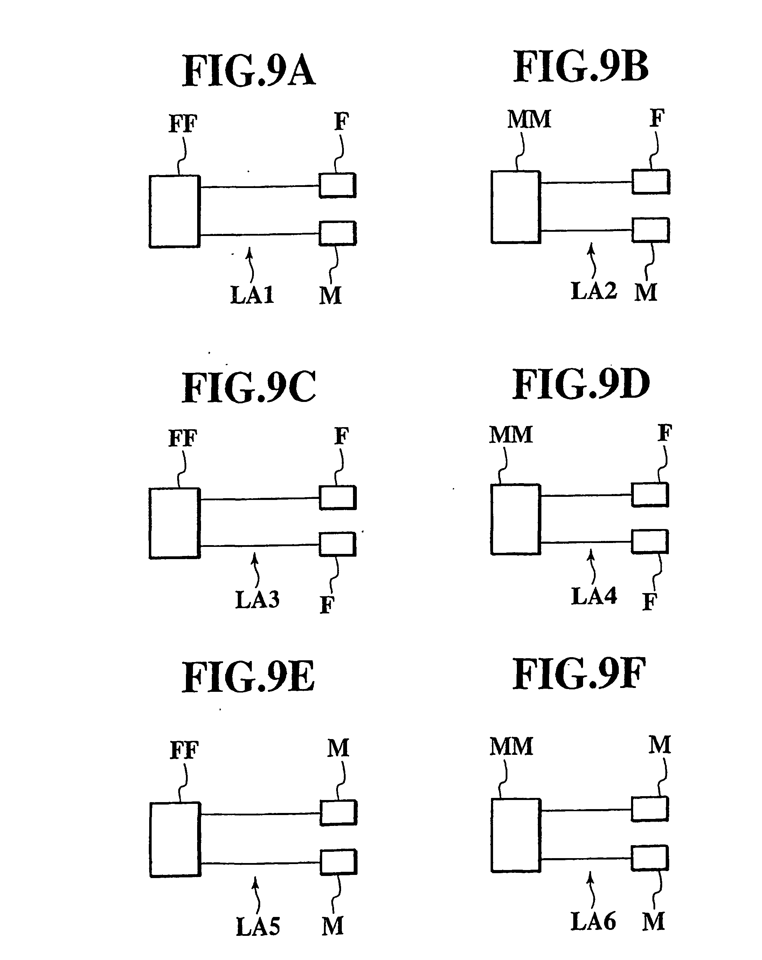

Figs. 9A to 9F show diverse line assemblies LA1 to LA6 prefabricated to common connection specifications, and adaptive for self-latching and manually unlatchable inter-module connections in the ring network of Fig. 5.

Odd-numbered line assemblies LA1, LA3 and LA5 each comprise a dual-pole female-form connector FF, and one of a pair of single-pole female and male connectors F and M, a pair of single-pole female connectors F and F, and a pair of single-pole male connectors M and M. Even-numbered line assemblies LA2, LA4 and LA6 each comprise a dual-pole male-form connector MM, and one of a pair of single-pole female and male connectors F and M, a pair of single-pole female connectors F and F, and a pair of single-pole male connectors M and M.

While the foregoing embodiments illustrate examples in which the topology of the vehicular network system was a linked, daisy chain topology, the present invention is not restricted to this type of topology, and can be alternately applied to a vehicular network system making use of some other topology, such as a bus topology.

While preferred embodiments of the present invention have been described, such description is for illustrative purposes, and it is to be understood that changes and variations may be made without departing from the scope of the following claims.

## Claims

1. A vehicular network system comprising:
an existing unit (31);
a plurality of communication lines (34, 35, 38) extending from the existing unit;
a pair of separable connector joints (36, 37) configured to connect the plurality of communication lines to form a closed-loop configuration;
the vehicular network system being configured to include at least one expansion unit (32, 33) in addition to the existing unit,
**characterised in that**
the pair of connector joints is provided in the communication lines, to thereby provide a pair of male (M) and female (F) connectors (M, F) to be respectively connected with a pair of female (F) and male (M) connectors provided on the expansion unit (32, 33).

2. A vehicular network system comprising:
a plurality of existing units (1, 2);
a plurality of communication lines (3, 4) extending from the existing units;
a plurality of pairs of separable connector joints (5, 6) configured to connect the plurality of communication lines to thus establish interconnections between the existing units;
the vehicular network system being configured to include at least one expansion unit (7) in addition to the existing units (1, 2),
**characterised in that**
the plurality of pairs of connector joints (5, 6) are provided along the length of the communication lines (3, 4), to thereby provide at least one pair of male (M) and female (F) connectors (M, F) to' be respectively connected with one pair of female (F) and male (M) connectors (F, M) provided on the expansion unit (7).

3. A vehicular network system according to claim 1 or 2, wherein said communication lines comprise a pair of optical communication lines (3, 4) each respectively dedicated for reception or transmission of light, and provided with said connector joints (5, 6).

4. A vehicular network system according to claim 1 or 2, wherein said expansion unit (7) has a combination of communication lines (8, 9) and connector configured as a standardized option (OP) for inter-unit connection.

5. A vehicular network system according to any one of claims 1 to 4 configured and arranged to a ring network system for vehicular optical communication, consisting of a set of mutually connectable and disconnectable modules (Y, Y1, Y2, Z) interconnected by said connectors (F, M) meeting a common specification for connection.

6. A vehicular network system according to claim 5, wherein the modules (Bi) each comprise an opto-electrical transducer (OE), an electro-optical transducer (EO), a processor (P) connected between the opto-electrical transducer and the electro-optical transducer, and a casing (Cs) for enclosing the opto-electrical transducer, the electro-optical transducer, and the processor.

7. A modification method for modifying a vehicular ring network system, comprising the steps of:
separating an inter-module connection line (3) of the network into a first line segment (3a) and a second line segment (3b) by disconnecting a male connector (M) on the first line segment from a female connector (F) on the second line segment (3b);
connecting the male (M) connector of the first line segment (3a) and a female connector (F) of another module (7) ; and
connecting the female connector (F) of the second line segment (3b) and a male connector (M) of the another module (7).

## Patentansprüche

1. Fahrzeugnetzwerksystem, welches aufweist:
eine vorhandene Einheit (31);
mehrere Kommunikationsleitungen (34, 35, 38), die von der vorhandenen Einheit ausgehen;
ein Paar trennbarer Steckerverbinder (36, 37), die so ausgebildet sind, die mehreren Kommunikationsleitungen so zu verbinden, dass die Anordnung einer geschlossenen Schleife ausgebildet wird;
wobei das Fahrzeugnetzwerksystem so ausgebildet ist, dass es zumindest eine Erweiterungseinheit (32, 33) zusätzlich zu der vorhandenen Einheit aufweist,
**dadurch gekennzeichnet, dass**
das Paar der Steckerverbinder in den Kommunikationsleitungen vorgesehen ist, um hierdurch ein Paar (M, F) aus einem Stiftstecker (M) und einer Steckerbuchse (F) zur Verfügung zu stellen, die jeweils mit einer Steckerbuchse (F) bzw. einem Stiftstecker (M) eines Paars verbunden werden sollen, die auf der Erweiterungseinheit (32, 33) vorgesehen sind.

2. Fahrzeugnetzwerksystem, welches aufweist:
mehrere vorhandene Einheiten (1, 2);
mehrere Kommunikationsleitungen (3, 4), die von den vorhandenen Einheiten ausgehen;
mehrere Paare trennbarer Steckerverbinder (5, 6), die dazu ausgebildet sind, die mehreren Kommunikationsleitungen zu verbinden, um so gegenseitige Verbindungen zwischen den vorhandenen Einheiten einzurichten;
wobei das Fahrzeugnetzwerksystem so ausgebildet ist, dass es zumindest eine Erweiterungseinheit (7) zusätzlich zu den vorhandenen Einheiten (1, 2) aufweist,
**dadurch gekennzeichnet, dass**
die mehreren Paare von Steckerverbindern (5, 6) entlang der Länge der Kommunikationsleitungen (3, 4) vorgesehen sind, um hierdurch zumindest ein Paar (M, F) aus einem Stiftstecker (M) und einer Steckerbuchse (F) eines Paars (F, M) zur Verfügung zu stellen, die mit einem Paar (F, M) aus einer Steckerbuchse (E) und einem Stiftstecker (M) verbunden werden sollen, welches auf der Erweiterungseinheit (7) vorgesehen ist.

3. Fahrzeugnetzwerksystem nach Anspruch 1 oder 2, bei welchem die Kommunikationsleitungen ein Paar optischer Kommunikationsleitungen (3, 4) umfassen, die jeweils für den Empfang oder die Aussendung von Licht bestimmt sind, und mit den Steckerverbindern (5, 6) versehen sind.

4. Fahrzeugnetzwerksystem nach Anspruch 1 oder 2, bei welchem die Erweiterungseinheit (7) eine Kombination aus Kommunikationsleitungen (8, 9) und Stecker aufweist, die als genormte Option (OP) für die Verbindung zwischen Einheiten ausgebildet ist.

5. Fahrzeugnetzwerksystem nach einem der Ansprüche 1 bis 4, das als Ringnetzwerksystem für die optische Fahrzeugkommunikation ausgebildet und angeordnet ist,
und aus einer Gruppe gegenseitig verbindbarer und trennbarer Module (Y, Y1, Y2, Z) besteht, die gegenseitig durch die Stecker (F, M) verbunden sind, die eine gemeinsame Spezifikation für die Verbindung erfüllen.

6. Fahrzeugnetzwerksystem nach Anspruch 5, bei welchem die Module (Bi) jeweils einen optoelektrischen Wandler (OE) umfassen, einen elektrooptischen Wandler (EO), einen Prozessor (P), der zwischen den optoelektrischen Wandler und dem elektrooptischen Wandler geschaltet ist, und ein Gehäuse (Cs) zum Einschließen des optoelektrischen Wandlers, des elektrooptischen Wandlers, und des Prozessors.

7. Modifikationsverfahren zum Modifizieren eines Fahrzeugringnetzwerksystems, mit folgenden Schritten:
Trennen einer Verbindungsleitung (3) zwischen Modulen des Netzwerks in ein erstes Leitungssegment (3a) und ein zweites Leitungssegment (3b), durch Trennen eines Stiftsteckers (M) auf dem ersten Leitungssegment von einer Steckerbuchse (F) auf dem zweiten Leitungssegment (3b);
Verbinden des Stiftsteckers (M) des ersten Leitungssegments (3a) und einer Steckerbuchse (F) eines anderen Moduls (7); und
Verbinden der Steckerbuchse (F) des zweiten Leitungssegments (3b) und eines Stiftsteckers (M) des anderen Moduls (7).

## Revendications

1. Système de réseau pour véhicule comprenant :
une unité existante (31) ;
une pluralité de lignes de communication (34, 35, 38) s'étendant depuis l'unité existante ;
une paire de jonctions de connecteurs séparables (36, 37) configurée pour connecter la pluralité des lignes de communication pour former une configuration en boucle fermée ;
le système de réseau pour véhicule étant configuré pour inclure au moins une unité d'extension (32, 33) en plus de l'unité existante,
**caractérisé en ce que**
la paire de jonctions de connecteurs est disposée dans les lignes de communication pour procurer de ce fait une paire de connecteurs (M,F) mâle (M) et femelle (F) pour être respectivement connectées à une paire de connecteurs femelle (F) et mâle (M) disposée sur l'unité d'extension (32, 33).

2. Système de réseau pour véhicule comprenant :
une pluralité d'unités existantes (1, 2) ;
une pluralité de lignes de communication (3, 4) s'étendant depuis les unités existantes ;
une pluralité de paires de jonctions de connecteurs séparables (5, 6) configurées pour connecter la pluralité des lignes de communication pour établir ainsi des interconnexions entre les unités existantes ;
le système de réseau pour véhicule étant configuré pour inclure au moins une unité d'extension (7) en plus des unités existantes (1, 2),
**caractérisé en ce que**
la pluralité des paires des jonctions de connecteurs (5, 6) sont disposées le long de la longueur de lignes de communication (3, 4) pour procurer de ce fait au moins une paire de connecteurs (M,F) mâle (M) et femelle (F), qui doivent être respectivement connectés à une paire de connecteurs (F,M) femelle (M) et mâle (M) disposés sur l'unité d'extension (7).

3. Système de réseau pour véhicule selon la revendication 1 ou 2, dans lequel les lignes de communication comprennent une paire de lignes de communication optique (3, 4) chacune dédiée respectivement pour la réception et l'émission de la lumière, et fournies avec lesdites jonctions de connecteurs (5, 6).

4. Système de réseau pour véhicule selon la revendication 1 ou 2, dans lequel ladite unité d'extension (7) a une combinaison des lignes de communication (8, 9) et un connecteur configuré comme option normalisée (OP) pour la connexion inter-unités.

5. Système de réseau pour véhicule selon l'une quelconque des revendications 1 à 4, configuré et agencé en un système de réseau en anneau pour une communication optique de véhicule, qui est constitué d'un ensemble de modules connectables et déconnectables mutuellement (Y, Y1, Y2, Z) interconnectés par lesdits connecteurs (F,M) satisfaisant une spécification commune pour la connexion.

6. Système de réseau pour véhicule selon la revendication 5, dans lequel les modules (Bi) comprennent chacun un transducteur opto-électrique (OE), un transducteur électro-optique (EO), un processeur (P) connecté entre le transducteur opto-électrique et le transducteur électro-optique, et un boîtier (Cs) pour enfermer le transducteur opto-électrique, le transducteur électro-optique et le processeur.

7. Procédé de modification pour modifier un système de réseau en anneau de véhicule, comprenant les étapes consistant à :
séparer une ligne de connexion inter-modules (3) du réseau en un premier segment de ligne (3a) et un second segment de ligne (3b) en déconnectant un connecteur mâle (M) sur le premier segment de ligne du connecteur femelle (F) sur le second segment de ligne (3b) ;
connecter le connecteur mâle (M) du premier segment de ligne (3a) et le un connecteur femelle (F) d'un autre module (7) ; et
connecter le connecteur femelle (F) du second segment de ligne (3b) et un connecteur mâle (M) de l'autre module (7).
